# FASCICULE DE BREVET EUROPEEN

(11) **EP 0 627 347 B1**
(45) Date de publication et mention de la délivrance du brevet: **09.09.1998**
(21) Numéro de dépôt: 94108288.5
(22) Date de dépôt: 30.05.1994
(51) Int. Cl.: B60S 1/34

(54) **Essuie-glace de véhicule automobile comportant des moyens pour faire varier la valeur du couple d'essuyage**
Scheibenwischer für Kraftfahrzeuge mit Vorrichtung zum Regeln des Wischdrucks
Windscreen wiper for motor vehicles with means to regulate the wiping pressure

(30) Priorité: 02.06.1993 FR 9306585
(43) Date de publication de la demande: 07.12.1994
(73) Titulaire: VALEO SYSTEMES D'ESSUYAGE, 78180 Montigny-Le-Bretonneux (FR)
(72) Inventeur: Eustache, Jean-Pierre, F-92160 Antony (FR)
(74) Mandataire: Gamonal, Didier

(56) Documents cités:
- DE-A- 3 743 669
- DE-A- 4 032 655
- FR-A- 2 507 554
- FR-A- 2 651 193

## Description

La présente invention concerne un essuie-glace, notamment de véhicule automobile, du type comportant un bras d'essuie-glace qui porte au moins un balai d'essuyage et qui est monté articulé, autour d'un axe d'articulation, sur une tête d'entraînement du bras d'essuie-glace.

La tête d'entraînement est soumise à un mouvement de rotation alternatif par un arbre d'essuyage afin d'obtenir un balayage de la vitre à essuyer.

Le bras d'essuie-glace porte un balai d'essuyage qui est articulé et qui est apte à essuyer la surface vitrée telle que par exemple un pare-brise de véhicule automobile.

Afin d'obtenir un essuyage efficace de la surface vitrée, il est nécessaire que la lame d'essuyage de l'essuie-glace soit appliquée sur la surface vitrée à essuyer avec une force de pression, ou force d'essuyage, suffisamment importante.

Dans ce but, il est connu au moins un ressort, tel que par exemple un ressort hélicoïdal de compression ou de traction, qui est agencé entre la tête d'entraînement et le bras d'essuie-glace et qui applique à ce dernier une force dont la droite support n'est pas concourante avec l'axe d'articulation du bras d'essuie-glace sur la tête d'entraînement de manière à appliquer en fait au bras d'essuie-glace un couple d'essuyage, également appelé couple nominal d'essuyage, dont la valeur est sensiblement constante.

Du fait de la conception de ce dispositif, la lame d'essuyage est appuyée pendant le mouvement de balayage de la surface vitrée, mais également en position de repos de l'essuie-glace.

Du fait de la constance de l'effort nominal d'essuyage qui est appliqué à la lame lorsque l'essuie-glace est en position de repos, la lame d'essuyage tend à conserver une déformation résiduelle résultant de l'écrasement de son profil contre la surface galbée de la vitre, la lame ne procurant plus alors un essuyage efficace de la surface vitrée.

Il est donc apparu souhaitable de pouvoir faire varier l'effort d'essuyage appliqué à la lame, notamment lorsque l'essuie-glace est au repos.

A cet effet, il a déjà été proposé dans le document FR-A-2 651 193 un essuie-glace du type mentionné précédemment et correspondant au préambule de la revendication 1 comportant des moyens pour faire varier la distance entre la droite support de la force exercée par le ressort et l'axe d'articulation du bras d'essuie-glace sur la tête d'entraînement.

Les différentes conceptions proposées dans ce document visent à faire varier la position de l'extrémité du ressort qui est relié à la tête d'entraînement, la position de l'axe d'articulation du bras d'essuie-glace étant fixe par rapport à la tête d'entraînement.

Ces conceptions ont pour inconvénients d'être de structures complexes et de ne pas permettre de faire varier de manière suffisamment importante la valeur du couple d'essuyage entre une position normale de fonctionnement et une position de soulagement lorsque l'essuie-glace est au repos.

Afin de remédier à ces inconvénients, l'invention propose un essuie-glace du type mentionné précédemment, caractérisé en ce qu'il comporte un actionneur dont le corps est associé à la tête d'entraînement et dont l'organe de sortie fait varier la position de l'axe d'articulation par rapport à la tête d'entraînement.

Selon d'autres caractéristiques de l'invention :
- une première extrémité du ressort est reliée à un point du bras d'essuie-glace et la seconde extrémité du ressort est reliée à la tête d'entraînement ;
- il comporte un basculeur d'entraînement monté à rotation sur la tête d'entraînement autour d'un axe de basculement parallèle à l'axe d'articulation du bras d'essuie-glace, dont une première branche est reliée à l'organe de sortie de l'actionneur et dont une seconde branche porte l'axe d'articulation du bras d'essuie-glace;
- l'actionneur est un moteur linéaire qui comporte un organe de sortie qui se déplace selon une direction perpendiculaire aux axes d'articulation et de basculement et dont l'extrémité libre est reliée à la première branche du basculeur d'entraînement ;
- la première branche du basculeur comporte un profil de came d'entraînement avec lequel coopère un élément suiveur de came agencé à l'extrémité libre de la tige de sortie de l'actionneur ;
- le profil de came est une rainure formée dans la première branche du basculeur dans laquelle est reçu un doigt d'actionnement fixé à l'extrémité libre de l'organe de sortie de l'actionneur ;
- le profil de came comporte deux tronçons d'extrémité, associés chacun à une position extrême du basculeur d'entraînement par rapport à la tête d'entraînement, et un tronçon de liaison ;
- chaque tronçon d'extrémité est un tronçon rectiligne qui, lorsque le basculeur occupe la position extrême associée à ce tronçon d'extrémité, s'étend parallèlement à la direction de déplacement de la tige de sortie de l'actionneur ;
- le ressort est un ressort hélicoïdal de traction.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en section longitudinale partielle d'un exemple d'un essuie-glace réalisé conformément aux enseignements de l'invention et qui est illustré en position de repos ;
- les figures 2 et 3 sont des vues en section selon les lignes 2-2 et 3-3 de la figure 1 ;

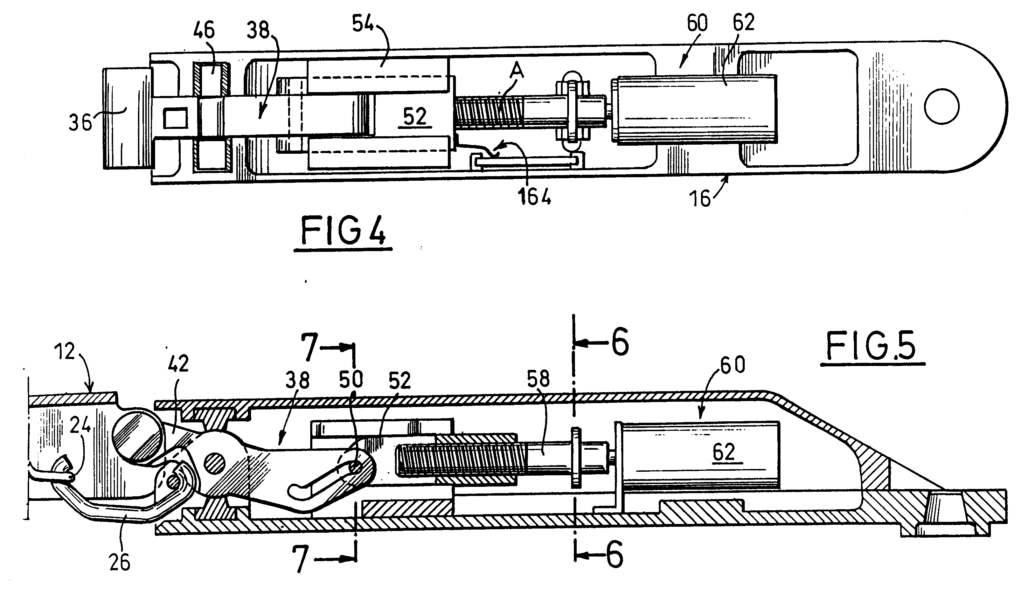

- la figure 4 est une vue partielle de dessus de l'essuie-glace illustré à la figure 1 ;
- la figure 5 est une vue similaire à celle de la figure 1 sur laquelle l'essuie-glace est illustré en position d'utilisation ;
- les figures 6 et 7 sont des figures en section selon les lignes 6-6 et 7-7 de la figure 5 ; et
- les figures 8 et 9 sont des vues à plus grande échelle de la partie centrale de l'essuie-glace illustré respectivement aux figures 1 et 5.

L'essuie-glace 10 illustré sur les figures est pour l'essentiel constitué par un bras d'essuie-glace 12 dont le corps ou carter 14 est monté articulé sur une tête d'entraînement 16 autour d'un axe géométrique d'articulation X-X qui s'étend selon une direction sensiblement perpendiculaire à la direction générale longitudinale du bras d'essuie-glace.

La tête d'entraînement 16 est prévue pour être reliée à un arbre d'entraînement (non représenté) qui provoque son déplacement alternatif autour d'un axe géométrique Y-Y qui est sensiblement perpendiculaire à l'axe d'articulation X-X.

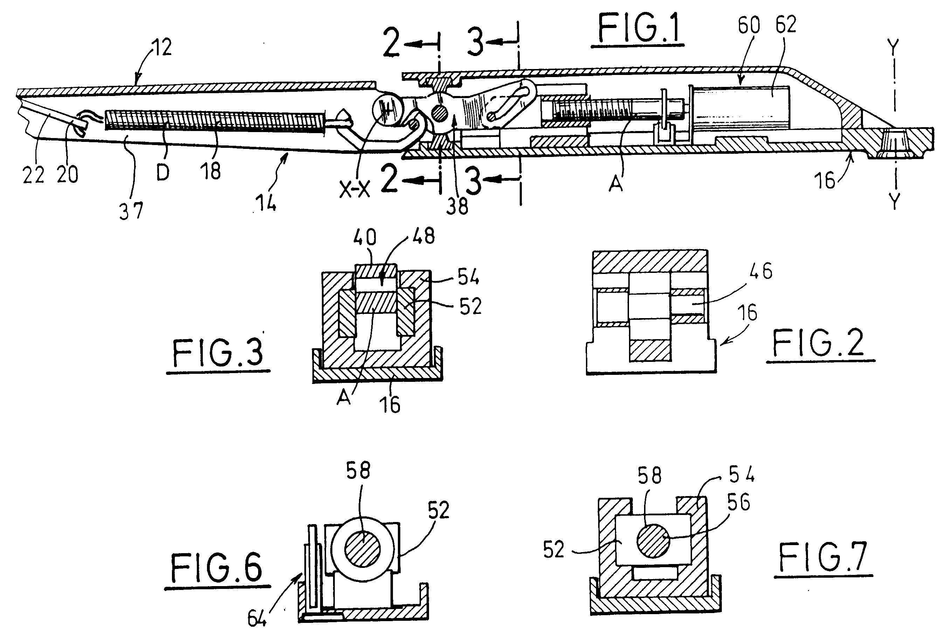

Selon un principe connu, un ressort hélicoïdal de traction 18 est agencé entre le bras d'essuie-glace 12 et la tête d'entraînement 16 de manière à appliquer au bras d'essuie-glace un couple d'essuyage qui le sollicite dans le sens anti-horaire en considérant la figure 1.

Dans ce but, la droite D support de la force de traction exercée par le ressort 18 n'est pas concourante avec l'axe X-X et la valeur du couple d'essuyage appliqué au bras d'essuie-glace 12 est une fonction du produit de la force de traction du ressort 18 par la distance "d" entre la droite D et l'axe X-X.

Conformément à l'invention, il est prévu des moyens pour faire varier la valeur du couple d'essuyage en faisant varier la distance "d" entre la droite support D et l'axe d'articulation X-X, en faisant varier la position de l'axe d'articulation X-X par rapport à la tête d'entraînement 16.

Le ressort de traction 18 est fixé par une première extrémité 20 à la tige 22 du bras d'essuie-glace 12 et par sa seconde extrémité 24 à une extrémité 26 d'un cavalier 28 dont l'autre extrémité 30 est accrochée sur un point fixe de la tête d'entraînement constituée par une tige d'accrochage 32 fixée au voisinage de l'extrémité libre de la tête d'entraînement opposée à l'axe Y-Y.

Conformément aux enseignements de l'invention, la partie arrière du corps 34 du bras d'essuie-glace 12, qui est par exemple constituée par deux joues latérales parallèles 37, est montée articulée sur un axe d'articulation 36 porté par un basculeur d'entraînement 38.

Le basculeur d'entraînement 38 est monté pivotant autour d'un axe géométrique T-T qui est parallèle à l'axe d'articulation X-X.

Le basculeur 38 comporte une première branche 40 et une seconde branche 42 qui s'étendent dans des directions opposées de part et d'autre de l'axe T-T.

La seconde branche 42 porte, au voisinage de son extrémité libre, un arbre 36 qui s'étend transversalement et dont les extrémités sont montées à rotation les joues latérales 36 du corps 34 du bras d'essuie-glace 12.

La partie centrale 44 du basculeur 38 est traversée par une tige d'articulation 46 qui est montée à rotation dans la tête d'actionnement 16 comme cela est illustré notamment aux figures 1, 2 et 8, la position de l'axe géométrique de basculement T-T étant fixe par rapport au corps de la tête d'entraînement 16.

La seconde branche 40 du basculeur d'entraînement 38 comporte une rainure 48 formant came dans laquelle est reçu un doigt d'actionnement 50 qui s'étend selon une direction parallèle aux axes d'articulation X-X et de basculement T-T.

Le doigt d'entraînement 50 est fixé à l'extrémité d'un plongeur 52 qui est monté coulissant et immobilisé en rotation dans un manchon de guidage 54, fixé à l'intérieur de la tête d'entraînement 16, et qui reçoit l'extrémité filetée 56 de la tige de sortie 58 tournante d'un moteur 60 dont le corps 62 est fixé à l'intérieur de la tête d'entraînement 16, de maniére à constituer un actionneur linéaire du type vis-écrou.

Le doigt d'entraînement 50 se déplace donc en coulissement en va et vient selon une direction A perpendiculaire aux axes X-X et T-T.

La rainure 48 comporte un tronçon central de liaison 64 et deux tronçons d'extrémité 66 et 70.

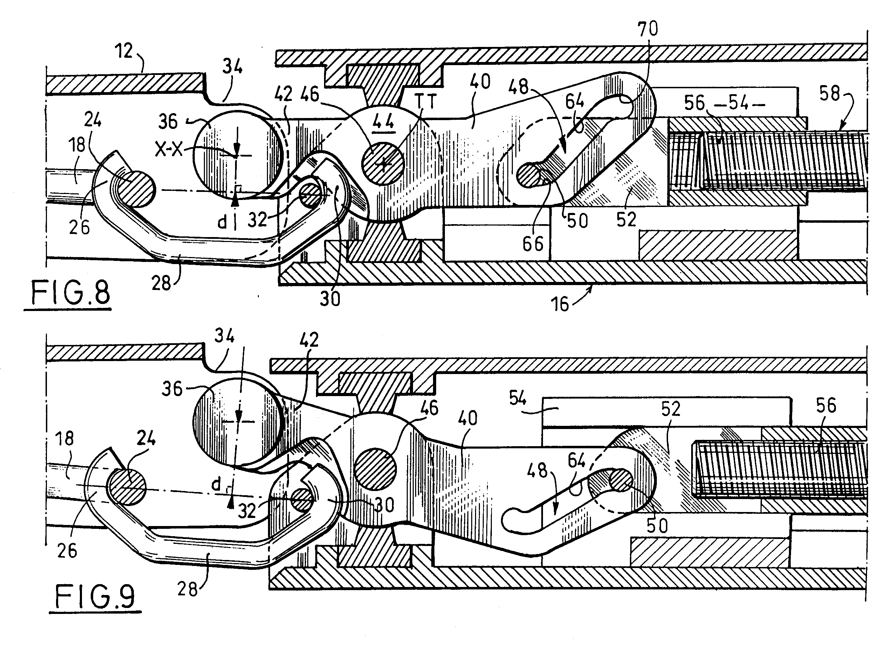

Le premier tronçon d'extrémité 66 est un tronçon rectiligne qui, comme on peut le voir aux figures 1 et 8 sur lesquelles le basculeur 38 est illustré dans sa position extrême correspondant au soulagement du bras d'essuie-glace 12 associée à la position de repos de l'essuie-glace, s'étend parallèlement à la direction de déplacement A de l'organe de sortie 52.

De même, le tronçon d'extrémité 70 est un tronçon rectiligne qui, lorsque le basculeur 38 occupe son autre position extrême illustrée aux figures 5 et 9, s'étend parallèlement à la direction A.

Des moyens de commande et de contrôle (non représentés) permettent de faire varier la position de l'organe de sortie 52 de l'actionneur entre l'une et l'autre des deux positions extrêmes illustrées aux figures 1, 8 et 5, 9.

Dans la position dite de soulagement illustrée aux figures 1 et 8, la distance "d" entre l'axe géométrique d'articulation X-X et la droite D est minimale, le couple nominal d'essuyage appliqué au bras d'essuie-glace 12 étant alors lui aussi minimal tandis que, dans la position illustrée aux figures 5 et 9, la distance "d" est maximale de manière à appliquer un couple maximal d'essuyage au bras d'essuie-glace 12.

Il est bien entendu possible, sans sortir du cadre de la présente invention, de commander l'actionneur de manière que l'organe de sortie 52 occupe une position intermédiaire entre ces deux positions extrêmes de manière à appliquer au bras d'essuie-glace 12 un couple nominal d'essuyage compris entre les valeurs minimale et maximale.

Les tronçons d'extrémité rectilignes 66 et 70 et leur orientation, décrite précédemment, permettent d'éviter que des efforts soient appliqués à l'actionneur dans les deux positions extrêmes. Les déplacements de la tige 58 peuvent être contrôlés au moyen d'un dispositif de détection tel que le dispositif 164 schématisé sur les figures du type à rhéostat électrique.

L'invention n'est pas limitée au mode de réalisation qui vient d'être décrit.

Elle trouve notamment à s'appliquer dans le cas où le ressort 18 est un ressort hélicoïdal de compression.

Il est également possible de concevoir de nombreuses variantes permettant d'obtenir une loi de variation plus complexe de la valeur du couple d'essuyage, par exemple en modifiant le profil du tronçon de liaison 64 de la came 48.

## Revendications

1. Essuie-glace (10), notamment de véhicule automobile, du type comportant un bras d'essuie-glace (12) qui porte au moins un balai d'essuyage et qui est monté articulé, autour d'un axe d'articulation (X-X), sur une tête d'entraînement (16) du bras d'essuie-glace (12), au moins un ressort (18) agencé entre la tête d'entraînement (16) et le bras d'essuie-glace (12) qui applique à ce dernier (12) une force dont la droite (D) support n'est pas concourante avec l'axe d'articulation (X-X) de manière à appliquer au bras d'essuie-glace (12) un couple d'essuyage, et du type comportant des moyens pour faire varier la distance (d) entre la droite support (D) de la force et l'axe d'articulation (X-X), caractérisé en ce qu'il comporte un actionneur (60) dont le corps (62) est associé à la tête d'entraînement (16) et dont l'organe de sortie (52, 56, 58) fait varier la position de l'axe d'articulation (X-X) par rapport à la tête d'entraînement (16).

2. Essuie-glace selon la revendication 1, caractérisé en ce qu'une première extrémité (20) du ressort (18) est reliée à un point (22) du bras d'essuie-glace (12), et en ce que la seconde extrémité (24) du ressort (18) est reliée à la tête d'entraînement (16, 32).

3. Essuie-glace selon la revendication 1, caractérisé en ce qu'il comporte un basculeur d'entraînement (38) monté à rotation sur la tête d'entraînement (16) autour d'un axe de basculement (T-T) parallèle à l'axe d'articulation (X-X) du bras d'essuie-glace (12), dont une première branche (40) est reliée à l'organe de sortie (56, 58) de l'actionneur (60) et dont une seconde branche (42) porte l'axe d'articulation (X-X) du bras d'essuie-glace (12).

4. Essuie-glace selon la revendication 3, caractérisé en ce que l'actionneur (60) est un moteur linéaire qui comporte un organe de sortie (52) qui se déplace selon une direction (A) perpendiculaire aux axes d'articulation (X-X) et de basculement (T-T) et dont l'extrémité libre (52, 50) est reliée à la première branche (40) du basculeur d'entraînement (38).

5. Essuie-glace selon la revendication 4, caractérisé en ce que la première branche (40) du basculeur comporte un profil de came d'entraînement (48) avec lequel coopère un élément suiveur de came (50) agencé à l'extrémité libre de l'organe de sortie (52) de l'actionneur (60).

6. Essuie-glace selon la revendication 5, caractérisé en ce que le profil de came est une rainure (48) formée dans la première branche (40) du basculeur d'entraînement (38) dans laquelle est reçu un doigt d'actionnement (50) fixé à l'extrémité libre de l'organe de sortie (52) de l'actionneur (60).

7. Essuie-glace selon l'une des revendications 5 ou 6, caractérisé en ce que le profil de came (48) comporte deux tronçons d'extrémité (66, 70), associés chacun à une position extrême du basculeur (38) par rapport à la tête d'entraînement (16), et un tronçon de liaison (64).

8. Essuie-glace selon la revendication 7, caractérisé en ce que chaque tronçon d'extrémité est un tronçon rectiligne qui, lorsque le basculeur occupe la position extrême associée à ce tronçon d'extrémité, s'étend parallèlement à la direction (A) de déplacement de la tige de sortie (58) de l'actionneur (60).

9. Essuie-glace selon l'une quelconque des revendications précédentes, caractérisé en ce que le ressort (18) est un ressort hélicoïdal de traction.

## Claims

1. A screen wiper (10), especially for a motor vehicle, of the type comprising a screen wiper arm (12) which carries at least one wiper blade and which is articulated, about a pivot axis (X-X), on a drive head (16) of the wiper arm (12), at least one spring (18) arranged between the drive head (16) and the wiper arm (12), which applies to the latter (12) a force the line of action (D) of which is not coincident with the pivot axis (X-X), whereby to apply a wiping torque to the wiper arm (12), and of the type including means for varying the distance (d) between the line of action (D) of the force and the pivot axis (X-X), characterised in that it includes an actuator (60), the body (62) of which is associated with the drive head (16), with the output member (52, 56, 58) of the actuator varying the position of the pivot axis (X-X) with respect to the drive head (16).

2. A screen wiper according to Claim 1, characterised in that a first end (20) of the spring (18) is connected at a point (22) on the screen wiper arm (12), and in that the second end (24) of the spring (18) is connected to the drive head (16, 32).

3. A screen wiper according to Claim 1, characterised in that it includes an actuating rocker (38) which is mounted for rotation on the drive head (16) about a rocking axis (T-T) parallel to the pivot axis (X-X) of the screen wiper arm (12), and which has a first branch (40) connected to the output member (56, 58) of the actuator (60), and a second branch (42) which carries the pivot axis (X-X) of the wiper arm (12).

4. A screen wiper according to Claim 3, characterised in that the actuator (60) is a linear motor having an output member (52) which is displaceable in a direction (A) at right angles to the pivot axis (X-X) and the rocking axis (T-T), with its free end (50) being connected to the first branch (40) of the actuating rocker (38).

5. A screen wiper according to Claim 4, characterised in that the first branch (40) of the rocker includes an actuating cam profile (48) with which there cooperates a cam follower element (50) arranged at the free end of the output member (52) of the actuator (60).

6. A screen wiper according to Claim 5, characterised in that the cam profile is a slot (48) formed in the first branch (40) of the actuating rocker (38), in which there is received an actuating finger (50) fixed to the free end of the output member (52) of the actuator (60).

7. A screen wiper according to Claim 5 or Claim 6, characterised in that the cam profile (48) has two end portions (66, 70), each of which is associated with one extreme position of the rocker (38) with respect to the drive head (16), and a connecting portion (64).

8. A screen wiper according to Claim 7, characterised in that each end portion is a straight portion which, when the rocker occupies the extreme position associated with that end portion, extends parallel to the direction (A) of displacement of the output rod (58) of the actuator (60).

9. A screen wiper according to any one of the preceding Claims, characterised in that the spring (18) is a helical tension spring.

## Patentansprüche

1. Scheibenwischer (10), insbesondere für Kraftfahrzeuge, umfassend einen Scheibenwischerarm (12), der mindestens ein Scheibenwischerblatt trägt und der gelenkig um eine Gelenkachse (X-X) an einem Antriebskopf (16) des Scheibenwischerarms (12) gelagert ist, mindestens eine zwischen dem Antriebskopf (16) und dem Scheibenwischerarm (12) angeordnete Feder (18), die auf diesen (12) eine Kraft anwendet, deren Trägergerade (D) nicht mit der Gelenkachse (X-X) konvergent ist, um auf den Scheibenwischerarm (12) einen Wischdruck anzuwenden, und umfassend Mittel zur Veränderung des Abstands (d) zwischen der Trägergeraden (D) der Kraft und der Gelenkachse (X-X),**dadurch gekennzeichnet,** daß er einen Stellantrieb (60) umfaßt, dessen Körper (62) mit dem Antriebskopf (16) verbunden ist und dessen Ausgangsorgan (52, 56, 58) die Position der Gelenkachse (X-X) im Verhältnis zum Antriebskopf (16) verändert.

2. Scheibenwischer nach Anspruch 1 , **dadurch gekennzeichnet**, daß ein erstes Ende (20) der Feder (18) mit einem Punkt (22) des Scheibenwischerarms (12) verbunden ist und daß das zweite Ende (24) der Feder (18) mit dem Antriebskopf (16, 32) verbunden ist.

3. Scheibenwischer nach Anspruch 1 , **dadurch gekennzeichnet**, daß er einen Antriebskipphebel (38) umfaßt, der am Antriebskopf (16) drehbar um eine zur Gelenkachse (X-X) des Scheibenwischerarms (12) parallele Kippachse (T-T) gelagert ist, von dem ein erster Schenkel (40) mit dem Ausgangsorgan (56, 58) des Stellantriebs (60) verbunden ist und von dem ein zweiter Schenkel (42) die Gelenkachse (X-X) des Scheibenwischerarms (12) trägt.

4. Scheibenwischer nach Anspruch 3 , **dadurch gekennzeichnet**, daß der Stellantrieb (60) ein Linearmotor ist, der ein Ausgangsorgan (52) umfaßt, das sich in einer Richtung (A) senkrecht zu den Gelenk- (X-X) und Kippachsen (T-T) bewegt und dessen freies Ende (52, 50) mit dem ersten Schenkel (40) des Antriebskipphebels (38) verbunden ist.

5. Scheibenwischer nach Anspruch 4 , **dadurch gekennzeichnet**, daß der erste Schenkel (40) des Kipphebels ein Antriebsnockenprofil (48) umfaßt, mit dem ein Nockenfolgeelement (50) zusammenwirkt, das am freien Ende des Ausgangsorgans (52) des Stellantriebs (60) angeordnet ist.

6. Scheibenwischer nach Anspruch 5 , **dadurch gekennzeichnet,** daß das Nockenprofil eine im ersten Schenkel (40) des Antriebskipphebels (38) ausgebildete Nut (48) ist, in die ein Betätigungsfinger (50) eingesetzt ist, der am freien Ende des Ausgangsorgans (52) des Stellantriebs (60) befestigt ist.

7. Scheibenwischer nach einem der Ansprüche 5 oder 6, **dadurch gekennzeichnet**, daß das Nockenprofil (48) zwei Endstücke (66, 70), die jeweils einer Endposition des Kipphebels (38) im Verhältnis zum Antriebskopf (16) zugeordnet sind, und ein Verbindungsstück (64) umfaßt.

8. Scheibenwischer nach Anspruch 7 , **dadurch gekennzeichnet**, daß jedes Endstück ein geradliniges Teilstück ist, das sich, wenn der Kipphebel die diesem Endstück zugeordnete Endposition einnimmt, parallel zur Bewegungsrichtung (A) der Ausgangsspindel (58) des Stellantriebs (60) erstreckt.

9. Scheibenwischer nach einein der vorangehenden Ansprüche, **dadurch gekennzeichnet**, daß die Feder (18) eine Schraubenzugfeder ist.
